# EUROPEAN PATENT SPECIFICATION

(11) **EP 4 049 885 B1**
(45) Date of publication and mention of the grant of the patent: **07.10.2026**
(21) Application number: 20878090.8
(22) Date of filing: 23.10.2020
(51) Int. Cl.: B60L 7/24, B60L 15/20, B60T 8/1761, B60L 9/18

(54) **CONTROL DEVICE**
STEUERUNGSVORRICHTUNG
DISPOSITIF DE COMMANDE

(30) Priority: 25.10.2019 JP 2019194096; 25.10.2019 JP 2019194097; 25.10.2019 JP 2019194098
(43) Date of publication of application: 31.08.2022
(73) Proprietor: DENSO CORPORATION, Kariya-city, Aichi 448-8661 (JP); TOYOTA JIDOSHA KABUSHIKI KAISHA, Toyota-shi Aichi 471-8571 (JP); ADVICS CO., LTD., Kariya-shi, Aichi 448-8688 (JP)
(72) Inventor: SUZUKI, Takuto, Kariya- city, Aichi 448-8661 (JP); SATOU, Takashi, Kariya- city, Aichi 448-8661 (JP); SHIGYOH, Masakatsu, Kariya- city, Aichi 448-8661 (JP); FUJITA, Yoshitaka, Toyota-shi, Aichi 471-8571 (JP); YAMASHITA, Tomohiro, Toyota-shi, Aichi 471-8571 (JP); YANO, Masao, Kariya-shi, Aichi 448-8688 (JP); UKAI, Sota, Kariya-shi, Aichi 448-8688 (JP)
(74) Representative: TBK
(86) International application number: PCT/JP2020/039988
(87) International publication number: WO 2021/080011

(56) References cited:
- EP-A1- 1 764 254
- EP-A2- 1 752 332
- WO-A1-2019/088024
- JP-A- 2000 055 790
- JP-A- 2015 030 280
- JP-A- 2016 210 215

## Description

### [Technical Field]

The present disclosure relates to a vehicle braking control device for controlling regenerative braking by an electric motor and frictional braking by frictional braking devices during anti-lock brake control.

### [Background Art]

In vehicle braking control, a technique is known in which a frictional braking device and a regenerative braking device are used in combination, where the frictional braking device performs braking by friction on wheels and the regenerative braking device employs an electric motor which can generate a driving force acting on the vehicle and can perform braking by functioning as a generator. Frequently with such a vehicle, when an anti-lock braking system (ABS) that prevents the wheels from locking is operated to avoid a slip state, a frictional braking device, which can control the braking forces acting on each of the wheels, is being used as the main source of braking power. At this time the regenerative braking device is not used, or as described in JP 2002 - 152 904 A below, the regenerative braking is limited to the extent that only a relatively small braking force is obtained, equivalent to that of engine braking.

A traction control device capable of suppressing slipping of the driving wheels of a vehicle is known, as described in JP 2007 - 006 681 A below. The traction control device described in JP 2007 - 006 681 A includes means for detecting or estimating the acceleration of the vehicle, driving wheel speed detecting means for detecting the rotational speed of the driving wheels, and electric motor control means. When slipping of the driving wheels is detected, the electric motor control means performs variable control of an electric motor in accordance with an index parameter representing the road surface condition, while causing a regenerative torque to be generated by the electric motor. During a period when regenerative torque is being generated by the electric motor, the electric motor control means obtains, as the required torque for traction control in accordance with acceleration, the value of torque required from the electric motor for generating the acceleration that is detected or estimated. The required torque for traction control thus obtained is used as the index parameter.

EP 1 752 332 A2 ddiscloses a hybrid/electric vehicle braking controller in which friction brakes and regenerative braking by electric motors are coordinated during wheel-slip/ABS control, including a motor driving a pair of wheels through a differential and separate rear-wheel electric motors.

EP 1 764 254 A1 discloses a control system for an industrial truck that uses motor-speed information and calibration/self-learning to derive control data, such as load or position-related information, for controlling vehicle/truck operation.

### [Summary of the Invention]

During operation of an ABS, the strength of the frictional force applied to each wheel by the frictional braking device is controlled with the aim of producing a slip ratio that increases the friction coefficient between the vehicle wheels and the ground. At this time, according to the configuration described in JP 2002 - 152 904 A, since the rotation speeds of the vehicle wheels fluctuate respectively independently, some time is required for convergence to a target slip ratio, thereby extending the distance that is traveled until recovery from a slip state is achieved.

It is an object of the present invention to provide a vehicle braking control device capable of achieving rapid recovery from a slip condition during anti-lock brake control while maintaining responsiveness of frictional braking devices.

The above object is solved by a control device according to claim 1. The control device is equipped with a motor control unit and a friction control unit. The motor control unit generates a drive braking torque that is applied to a right-side driving wheel and a left-side driving wheel of a vehicle from an electric motor connected to the right-side driving wheel and the left-side driving wheel via a differential device, for applying a driving force or a braking force to the right-side driving wheel and the left-side driving wheel. The friction control unit controls a right-side frictional braking device that performs frictional braking of the right-side driving wheel and a left-side frictional braking device that performs frictional braking of the left-side driving wheel. The motor control unit generates the drive braking torque in response to the friction control unit executing anti-lock brake control for the right-side driving wheel and the left-side driving wheel. The motor control unit calculates the drive braking torque by subtracting, from a required torque that corresponds to an average value of the rotation speed of the left-side driving wheel and the rotation speed of the right-side driving wheel, a right-side braking torque by which the right-side frictional braking device performs frictional braking of the right-side driving wheel and a left-side braking torque by which the left-side frictional braking device performs frictional braking of the left-side driving wheel. The motor control unit adjusts the drive braking torque such that the responsiveness of at least one of the right-side frictional braking device and the left-side frictional braking device does not fall below a predetermined degree.

Accordingly, when anti-lock brake control is executed, since the drive braking torque generated by the motor control unit is transmitted to the right-side driving wheel and the left-side driving wheel via a differential device, the average value of the rotation speeds of the right-side driving wheel and the left-side driving wheel is controlled. Since the right-side driving wheel and the left-side driving wheel affect each other such as to satisfy the average value of rotation speed, the extent of fluctuation of the respective rotation speeds of the right-side driving wheel and the left-side driving wheel is reduced, fluctuation of the slip ratio is suppressed, and the slip ratio can be made to quickly converge to a target value, even if the right-side frictional braking device and the left-side frictional braking device perform frictional braking independently of one another. By reducing the fluctuation range of the wheel speeds of the right-side driving wheel and the left-side driving wheel, it is possible to reduce vibration of the vehicle. Furthermore, since the regenerative braking force of an electric motor can be utilized even during execution of anti-lock brake control, the amount of power generated can be increased.

In the braking device described in JP 2002 - 152 904 A, the braking force obtained from the regenerative braking device during operation of the ABS remains at a level equivalent to engine braking or, depending upon the road surface friction coefficient µ, remains at a lower level than that of engine braking. On the other hand, if it is attempted to obtain a relatively large braking force from the regenerative braking device, the functioning of the ABS in using the frictional braking device may be hindered, and time may be required for recovery from a slip state.

A further effect of the present invention is that frictional braking force and regenerative braking force can be used in combination during anti-lock brake control, without hindering anti-lock brake control that utilizes the frictional braking devices, while enabling regenerative braking force to be utilized as much as possible.

In particular, during execution of anti-lock brake control, the motor control unit calculates and adjusts the drive braking torque in cooperation with the friction control unit as defined in claim 1.

In addition, by adjusting the drive braking torque such that the responsiveness of at least one of the right-side frictional braking device and the left-side frictional braking device does not fall below a predetermined degree, the frictional braking devices can be kept in a range in which sufficient responsiveness is maintained.

Further optional aspects of the control device relate to determining a value of the drive braking torque for starting feedback control based on a relationship between the drive braking torque and a slip state of the right-side driving wheel and the left-side driving wheel. Such optional aspects may reduce calculation load and allow the feedback control to respond to changes in vehicle behaviour, for example changes caused by replacement of tires.

### [Brief Description of the Drawings]

Fig. 1 is a diagram showing a schematic configuration of a vehicle according to a first embodiment;
Fig. 2 is a diagram for explaining the transfer of signals in Fig. 1;
Fig. 3 is a flowchart for explaining the control flow shown in Fig. 1;
Fig. 4 is a diagram for explaining the relationship between slip ratio and frictional force in the direction of travel;

With the present disclosure, since the drive braking torque corresponding to the rotation speed of the driving wheels for starting the feedback control is determined based on a relationship between values of the drive braking torque and the slip state of the driving wheels, it is possible to determine the drive braking torque for starting the feedback control based on the behavior of the vehicle, without requiring knowledge of the load capacity of the vehicle or the road surface condition, and it is possible to make the slip state of the driving wheels quickly converge to within a target range.

### [Brief Description of the Drawings]

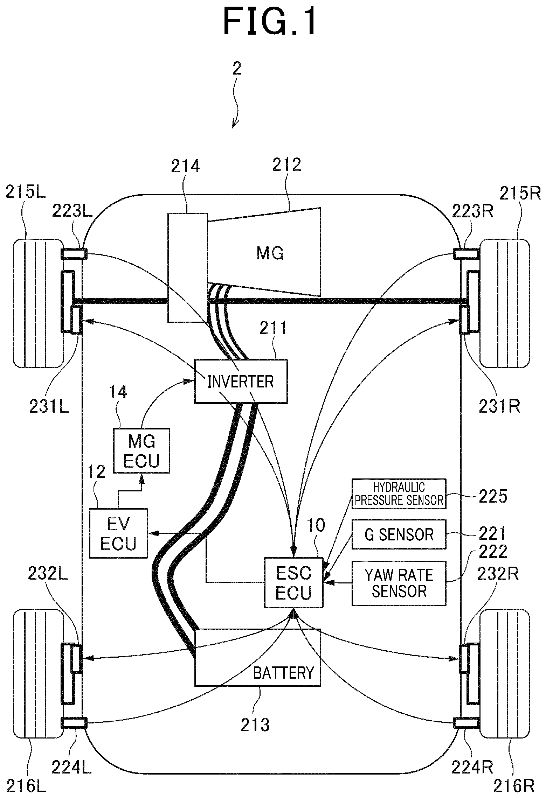

Fig. 1 is a diagram showing a schematic configuration of a vehicle according to a first embodiment;

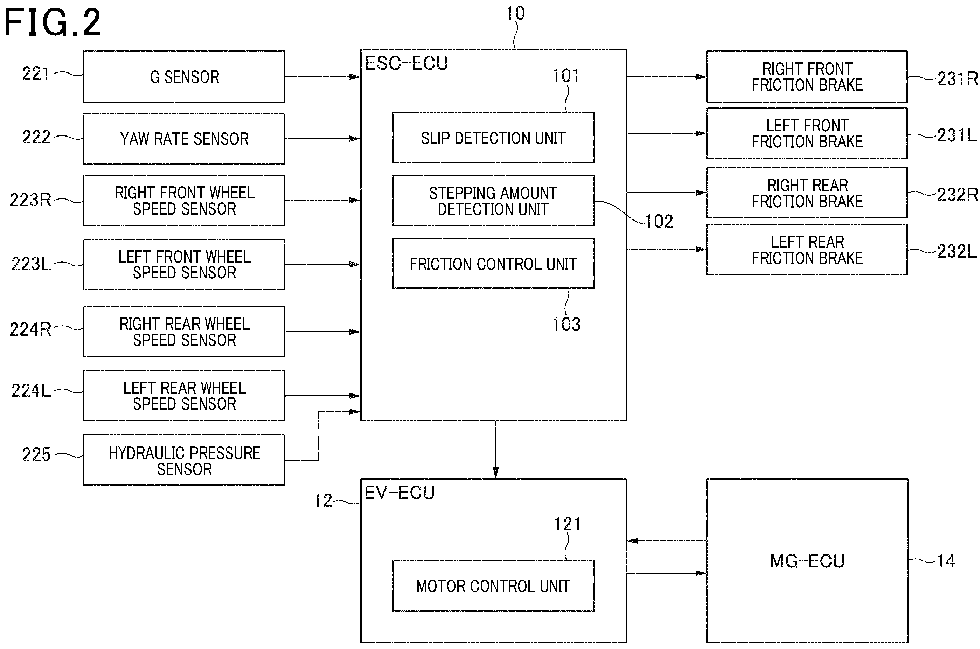

Fig. 2 is a diagram for explaining the transfer of signals in Fig. 1;

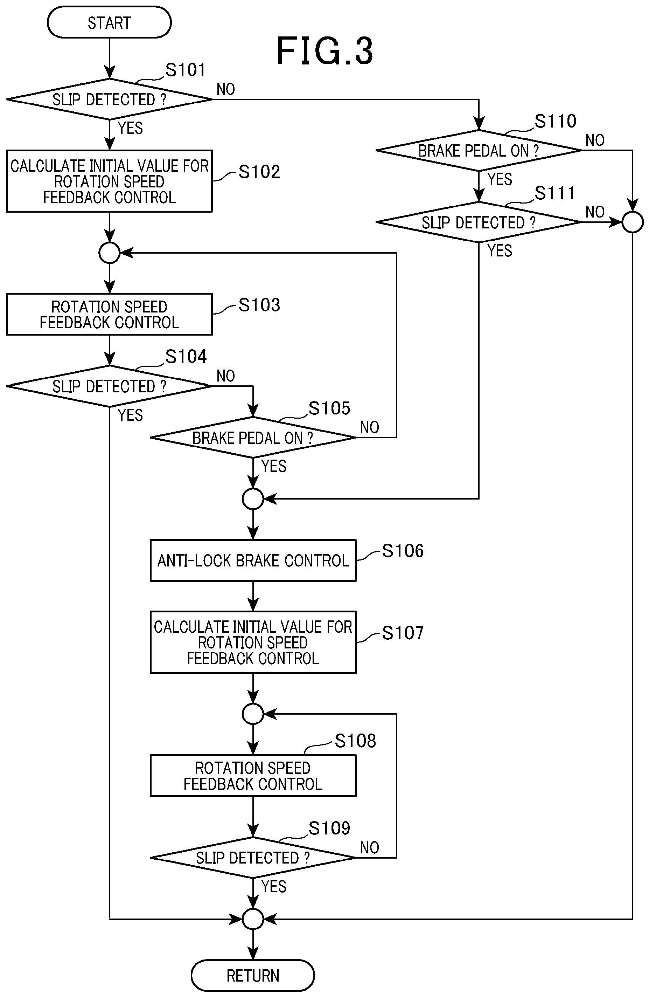

Fig. 3 is a flowchart for explaining the control flow shown in Fig. 1;

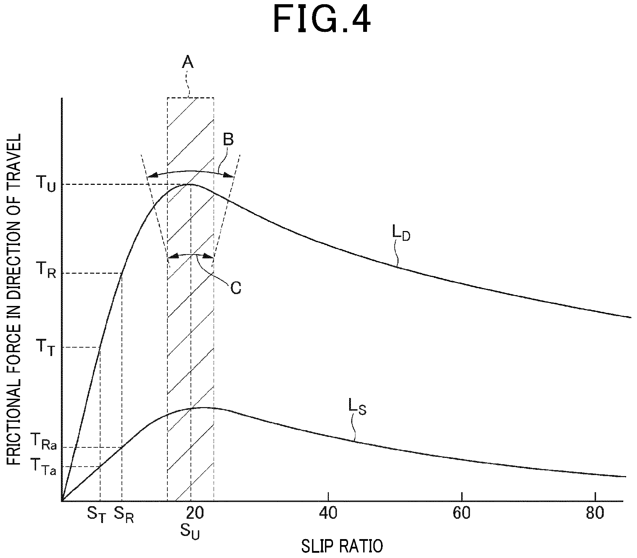

Fig. 4 is a diagram for explaining the relationship between slip ratio and frictional force in the direction of travel;

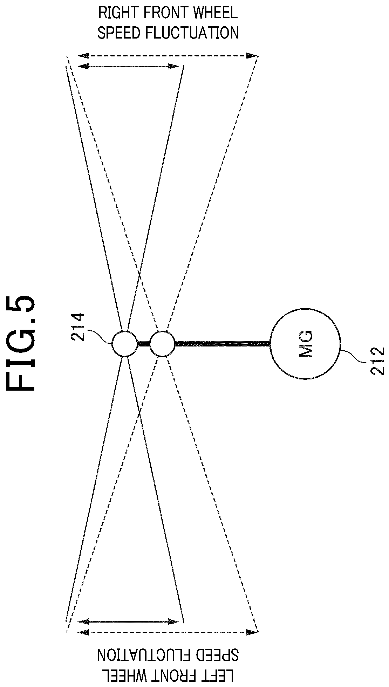

Fig. 5 is a diagram showing an image of the amplitude of speed fluctuation of the driving wheels;

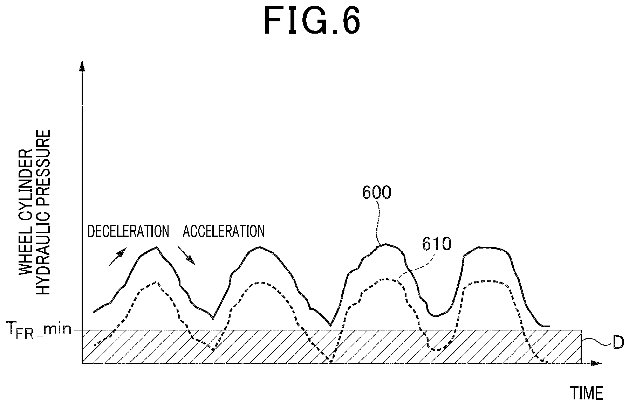

Fig. 6 shows variations in the hydraulic pressure applied to a wheel cylinder of a friction brake;

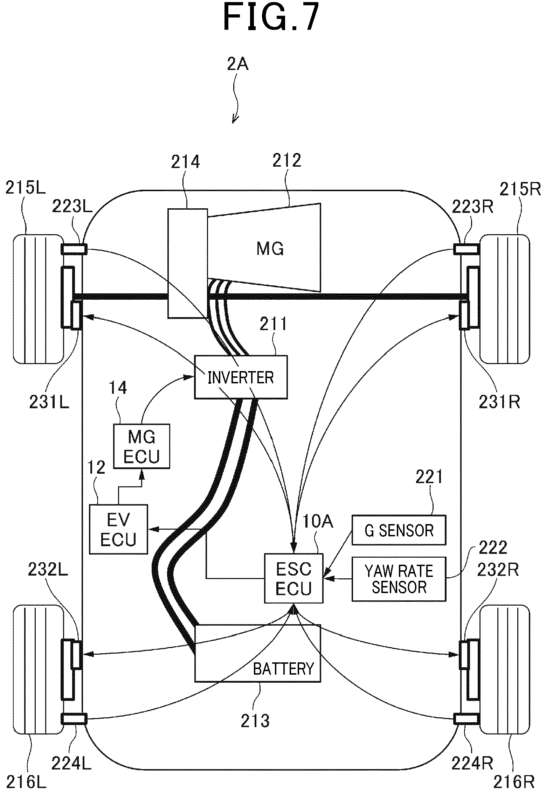

Fig. 7 is a diagram showing a schematic configuration of a vehicle according to a second embodiment;

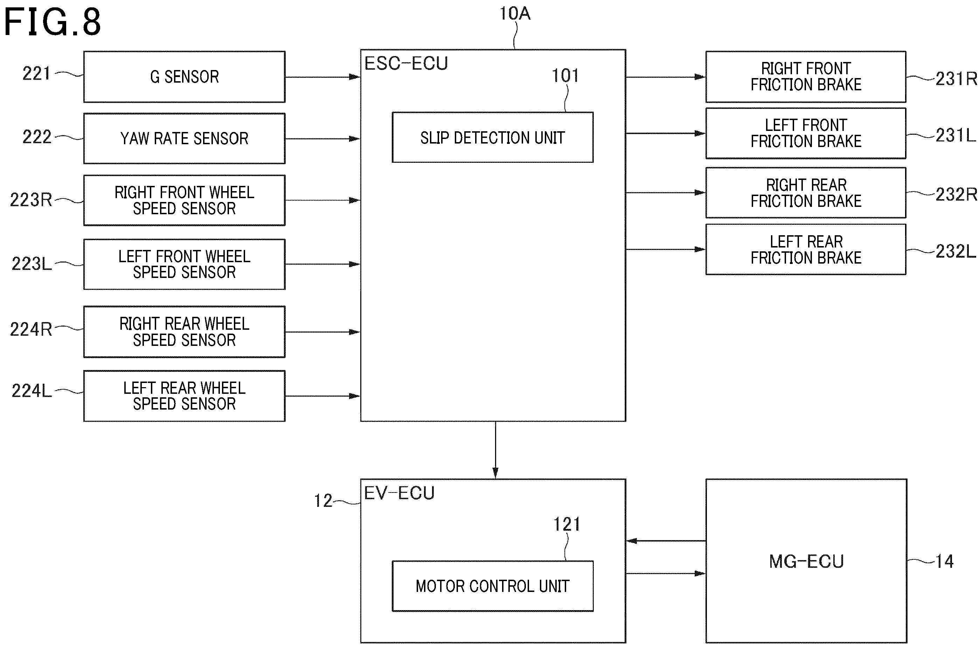

Fig. 8 is a diagram for explaining the transfer of signals in Fig. 7;

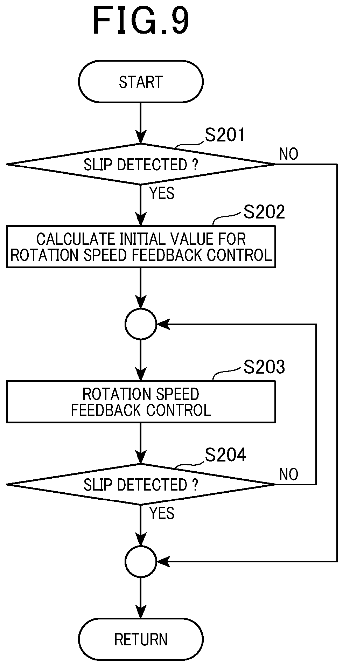

Fig. 9 is a flowchart for explaining the control flow in Fig. 7; and

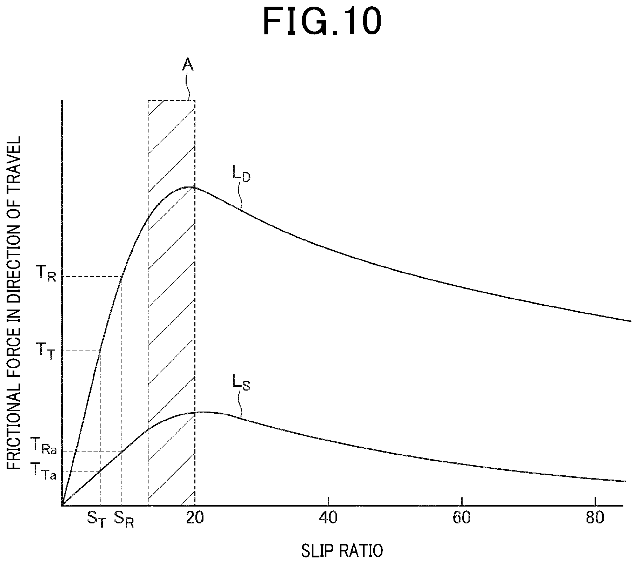

Fig. 10 is a diagram for explaining the relationship between slip ratio and frictional force in the direction of travel.

### [Description of Embodiments]

Embodiments are described in the following referring to the accompanying drawings. To facilitate understanding of the description, components that are identical are designated in the drawings by the same reference numerals as far as possible, with duplicate description omitted.

### [First Embodiment]

As shown in Fig. 1, a vehicle 2 is provided with a right front wheel 215R and left front wheel 215L, and a right rear wheel 216R and left rear wheel 216L. The right front wheel 215R and the left front wheel 215L function as a right-side driving wheel and a left-side driving wheel for driving the vehicle 2, respectively. The right rear wheel 216R and the left rear wheel 216L respectively function as a right-side driven wheel and a left-side driven wheel, that rotate with the driving of the right front wheel 215R and the left front wheel 215L.

The right front wheel 215R, the left front wheel 215L, the right rear wheel 216R, and the left rear wheel 216L are provided with a right front friction brake 231R, a left front friction brake 231L, a right rear friction brake 232R, and a left rear friction brake 232L, respectively. The right front friction brake 231R, the left front friction brake 231L, the right rear friction brake 232R, and the left rear friction brake 232L each apply frictional force to the corresponding wheels to effect frictional braking of the wheels. The right front friction brake 231R is a specific example of a right-side frictional braking device, and the left front friction brake 231L is a specific example of a left-side frictional braking device.

The vehicle 2 is provided with an inverter 211, a motor generator 212, a battery 213, and a differential gear 214. The inverter 211 is provided between the motor generator 212 and the battery 213. When the motor generator 212 is driven by using electric power from the battery 213, the inverter 211 converts the DC output from the battery 213 into three-phase alternating current, which is supplied to the motor generator 212. When the motor generator 212 is used as a generator and regenerative braking is performed, the inverter 211 converts the three-phase alternating current output from the motor generator 212 into direct current and supplies it to the battery 213

The motor generator 212 is an electrical machine that can function both as an electric motor and as a generator. The motor generator 212 is connected to the right front wheel 215R and the left front wheel 215L, which are driving wheels, via a differential device consisting of a differential gear 214. When the three-phase alternating current is supplied from the inverter 211, the motor generator 212 rotates in accordance with the supplied three-phase alternating current and drives the right front wheel 215R and the left front wheel 215L via the differential gear 214. When regenerative braking is performed, the rotations of the right front wheel 215R and the left front wheel 215L are transmitted to the motor generator 212 via the differential gear 214. When the battery 213 can store electricity, power is generated by rotating the shaft of the motor generator 212, and the three-phase alternating current thereby generated is converted to direct current by the inverter 211 and supplied to the battery 213.

The vehicle 2 includes an ESC-ECU (Electronic Stability Control-Electronic Control Unit) 10, an EV-ECU (Electric Vehicle-Electronic Control Unit) 12, and an MG-ECU (Motor Generator-Electronic Control Unit) 14.

The ESC-ECU 10 is a device for stabilizing the behavior of the vehicle 2. The ESC-ECU 10 receives detection signals that are output from a G sensor 221, a yaw rate sensor 222, a right front wheel speed sensor 223R, a left front wheel speed sensor 223L, a right rear wheel speed sensor 224R, a left rear wheel speed sensor 224L, and a hydraulic pressure sensor 225.

The G sensor 221 is a sensor for measuring the acceleration of the vehicle 2 during acceleration and deceleration. During acceleration and deceleration of the vehicle 2 in the front-rear direction, the G sensor 221 outputs a signal indicative of the acceleration to the ESC-ECU 10. The yaw rate sensor 222 is a sensor for measuring the angular velocity around the vertical axis of the vehicle 2. The yaw rate sensor 222 outputs a signal indicative of the angular velocity around the vertical axis of the vehicle 2 to the ESC-ECU 10.

The right front wheel speed sensor 223R is a sensor for measuring the wheel speed of the right front wheel 215R, and outputs a signal indicative of the wheel speed of the right front wheel 215R to the ESC-ECU 10.

The left front wheel speed sensor 223L is a sensor for measuring the wheel speed of the left front wheel 215L, and outputs a signal indicative of the wheel speed of the left front wheel 215L to the ESC-ECU 10.

The right rear wheel speed sensor 224R is a sensor for measuring the wheel speed of the right rear wheel 216R, and outputs a signal indicative of the wheel speed of the right rear wheel 216R to the ESC-ECU 10.

The left rear wheel speed sensor 224L is a sensor for measuring the wheel speed of the left rear wheel 216L, and outputs a signal indicative of the wheel speed of the left rear wheel 216L to the ESC-ECU 10.

The hydraulic pressure sensor 225 is a sensor for measuring the hydraulic pressure of braking that corresponds to the degree to which the brake pedal (not shown) is being depressed, and outputs a signal indicative of the hydraulic pressure of braking to the ESC-ECU 10. The hydraulic pressure of braking is an example of a parameter that indicates the degree of a braking operation executed by the driver, however parameters indicating the degree of a braking operation are not limited to this.

The ESC-ECU 10 executes calculations for stabilizing the behavior of the vehicle 2, with these calculations being based on the signals produced from the G sensor 221, yaw rate sensor 222, right front wheel speed sensor 223R, left front wheel speed sensor 223L, right rear wheel speed sensor 224R, left rear wheel speed sensor 224L, and hydraulic pressure sensor 225. Based on the results of these calculations, the ESC-ECU 10 outputs a signal to the EV-ECU 12 for adjusting the vehicle body speed of the vehicle 2. Also based on the results of these calculations, the ESC-ECU 10 outputs signals for performing frictional braking to the right front friction brake 231R, the left front friction brake 231L, the right rear friction brake 232R, and the left rear friction brake 232L.

Based on the information on the vehicle body speed that is output from the ESC-ECU 10, the rotation speed of the motor generator 212 that is output from the MG-ECU 14, information indicative of driver operations such as the degree of accelerator opening, and signals that are output from various sensors (not shown), the EV-ECU 12 outputs to the MG-ECU 14 the value of torque corresponding to the rotation speed that is to be produced.

The MG-ECU 14 outputs a control signal to the inverter 211 such that the motor generator 212 generates the prescribed torque. The MG-ECU 14 measures the rotation speed of the motor generator 212, and outputs information indicating that rotation speed to the EV-ECU 12.

The functional operations of the ESC-ECU 10, the EV-ECU 12, and the MG-ECU 14 are described in the following referring to Fig. 2. As shown in Fig. 2, the ESC-ECU 10 includes a slip detection unit 101, a stepping amount detection unit 102 and a friction control unit 103, as functional components.

The slip detection unit 101 is a part that detects a slip state of the right front wheel 215R and the left front wheel 215L, which are the driving wheels. Occurrence of a slip state can also be detected from the slip ratio of the vehicle 2, which is obtained by using the following equation (f1). 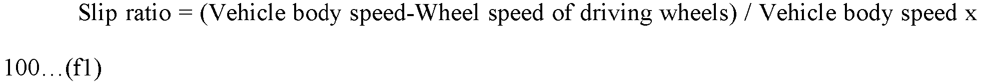 Slip ratio = (Vehicle body speed-Wheel speed of driving wheels) / Vehicle body speed x 100...(f1)

The vehicle body speed can be determined by any or a combination of the wheel speeds of the right rear wheel 216R and the left rear wheel 216L, which are the driven wheels, the acceleration of the vehicle 2, and GPS information. The wheel speed of the driven wheels can be obtained as the average value of the wheel speeds of the right rear wheel 216R and the left rear wheel 216L. The wheel speed of the right rear wheel 216R can be acquired from the output signal of the right rear wheel speed sensor 224R. The wheel speed of the left rear wheel 216L can be acquired from the output signal of the left rear wheel speed sensor 224L

The wheel speed of the driving wheels can be obtained as the average value of the wheel speeds of the right front wheel 215R and the left front wheel 215L. The wheel speed of the right front wheel 215R can be acquired from the output signal of the right front wheel speed sensor 223R. The wheel speed of the left front wheel 215L can be acquired from the output signal of the left front wheel speed sensor 223L. The wheel speed of the driving wheels can also be obtained from the rotation speed and reduction ratio of the motor generator 212. The wheel speed of the driving wheel can also be obtained from the output value of a rotation sensor provided on the driving wheel axle or from the output value of a rotation sensor provided on the speed reducer.

The acceleration of the vehicle 2 can be acquired from the output signal of the G sensor 221. GPS information for the vehicle 2 can be acquired from a GPS information acquisition device (not shown).

The depression amount detection unit 102 detects the amount of depression of the brake pedal based on a signal indicative of the hydraulic pressure of braking, which is output from the hydraulic pressure sensor 225. In the present specification, for convenience of explanation, a state in which the depression amount exceeds a predetermined threshold value and anti-lock brake control can be executed is referred to as a brake on state, and a state in which the depression amount is equal to or less than the predetermined threshold value is referred as a brake off state.

The friction control unit 103 controls the operation of the right front friction brake 231R, the left front friction brake 231L, the right rear friction brake 232R and the left rear friction brake 232L based on the slip state of the driving wheels, detected by the slip detection unit 101, and the amount of depression of the brake pedal, detected by the depression amount detection unit 102.

When it is judged that the driving wheels are in a slip state and the braking is in the on state, the friction control unit 103 executes the anti-lock brake control. In executing anti-lock brake control, the friction control unit 103 prevents each of the wheels from locking by controlling the strength of the frictional force applied to the wheels by each of the friction brakes respectively independently, irrespective of the amount of depression of the brake pedal. When it is judged that at least one of two conditions exists, i.e., the condition that the driving wheels are not in the slip state and the condition that the braking is judged to be in the off state, the friction control unit 103 executes normal brake control. During normal brake control, the friction control unit 103 controls the friction brakes to apply a degree of frictional force to the respective wheels in accordance with the amount of depression of the brake pedal.

The slip state detected by the slip detection unit 101 is output to the EV-ECU 12. The EV-ECU 12 includes a motor control unit 121 as a functional component.

The motor control unit 121 is a part which causes a drive braking torque to be generated from the motor generator 212 which is connected to the right front wheel 215R and the left front wheel 215L, that are the driving wheels of the vehicle 2, for applying a drive force or a braking force to the right front wheel 215R and left front wheel 215L. The motor control unit 121 aggregates information such as the accelerator opening degree, which is output from sensors that detect operations performed by the driver, information that is produced from various other sensors, information that is output from the ESC-ECU 10, and information that is output from the MG-ECU 14, and thereby determines the indicated torque for the motor generator 212 and outputs that indicated torque to the MG-ECU 14.

Specific control contents concerning the slip detection unit 101, the depression amount detection unit 102, the friction control unit 103, and the motor control unit 121 are described next, referring to Fig. 3.

In step S101, the slip detection unit 101 judges whether a slip state has occurred. Occurrence of a slip state can be judged by various methods. For example, if the rotation speed of the motor generator 212 exceeds a slip judgement rotation speed, which is determined in accordance with the vehicle body speed of the vehicle 2 at the current time, it can be judged that the vehicle is in a slip state. As another example, the slip ratio may be calculated by using the following equation (f1), and if the calculated slip ratio exceeds a predetermined value, it can be judged that there is a slip state. 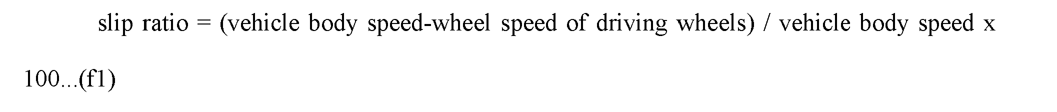 slip ratio = (vehicle body speed-wheel speed of driving wheels) / vehicle body speed x 100...(f1)

Values that are suitable for controlling the vehicle 2 are not limited to a slip judgement rotation speed, and a slip judgement value or other appropriate index may be used. An example of the case where a slip judgement value is used will be described referring to Fig. 4.

Fig. 4 is a graph in which the horizontal axis represents values of slip ratio and the vertical axis represents values of frictional force in the direction of travel. The relationship between the slip ratio and the frictional force in the direction of travel changes depending on the road surface conditions and tire conditions. Fig. 4 shows examples of a frictional force line L_{D} for a dry asphalt road surface and a frictional force line L_{S} for a snow-covered road surface.

In both the frictional force line L_{D} and the frictional force line L_{S}, the frictional force in the direction of travel becomes a maximum in the vicinity of a slip ratio of 20%, and hence a range of slip ratios that includes the 20% value is set as a control target range A. A suitable value for controlling the vehicle 2 can be used for the slip judgement value as appropriate, as described above, and does not necessarily have to be within the control target A. For example, a slip judgement value S_{R} corresponding to a slip ratio of approximately 10% may be used.

As shown in Fig. 4, the torque value corresponding to the slip judgement value S_{R} is the slip judgement torque T_{R} in the case of the friction force line L_{D}, and is the slip judgement torque T_{Ra} in the case of the friction force line L_{S}.

The description will be continued referring again to Fig. 3. If it the slip detection unit 101 judges that there is a slip state (YES in step S101), the process proceeds to step S102. If the slip detection unit 101 does not judge that there is a slip state (NO in step S101), the process proceeds to step S110.

In step S102, the motor control unit 121 determines an initial value of feedback control for controlling the motor generator 212 to rotate at a target rotation speed, with that feedback control being referred to as the first feedback control in the following. The value of torque produced by the motor generator 212 for reaching the target rotation speed is used as the initial value.

The method of determining that initial value of output torque will be described referring again to Fig. 4. When the slip judgement value S_{R} for the feedback control is determined, the relationship between slip ratio and frictional force in the direction of travel, up to the slip judgement value S_{R}, is obtained. That relationship changes depending on the road surface condition and the tire condition, and the relationship between the frictional force lines L_{D} and L_{S} can be obtained, as illustrated in Fig. 4.

If the relationship between the slip ratio and the frictional force in the travel direction is linear, in the frictional force lines L_{D} and L_{S}, then when a target slip ratio S_{T} has been determined, the corresponding initial values of torque T_{T} and T_{Ta} can be determined. The following equations (f2) and (f3) are used in the calculations: ${T}_{T} = {T}_{R} x {S}_{T} / {S}_{R}$ (f2) ${T}_{Ta} = {T}_{Ra} \times {S}_{T} / {S}_{R}$ (f3)

In this way, the motor control unit 121 can determine the output torque of the motor generator 212 that corresponds to a target slip ratio, by using a relationship between values of output torque of the motor generator 212 and slip ratio until slip is determined.

The description will be continued referring again to Fig. 3. In step S103 following step S102, the motor control unit 121 executes the first feedback control. The motor control unit 121 determines the output torque that is applied in the first feedback control for reaching the target rotation speed, from the initial value that was determined in step S102.

In step S104 following step S103, the slip detection unit 101 judges whether recovery has occurred from the slip state. The slip state can be judged in the same manner as in step S101.

If it is judged that there is recovery from the slip state (YES in step S104), the slip detection unit 101 executes a return. If it is not judged that there is recovery from the slip state (NO in step S104), the process proceeds to step S105.

In step S105, the depression amount detection unit 102 judges whether the brake pedal is in the ON state. If it is judged that the brake pedal is in the ON state (YES in step S105), the process proceeds to step S106. If the depression amount detection unit 102 judges that the brake pedal is in the off state (NO in step S105), the process returns to step S103.

In step S106, the friction control unit 103 stops normal brake control and executes antilock brake control.

In step S107 following step S106, the motor control unit 121 determines an initial value of the feedback control for controlling the rotation speed of the motor generator 212 to a target rotation speed. This feedback control is referred to in the following as the second feedback control. The torque required to be output by the motor generator 212 for reaching the target rotation speed is used as the initial value.

It would be equally possible for the output torque of the motor generator 212 corresponding to a target slip ratio to be set as the initial value, for example, as in step S102 described above, from the relationship between the output torque of the motor generator 212 and the slip ratio. The target slip ratio may be, for example, a value within the control target range A. A target slip ratio S_{U} of 20% can be set, which maximizes the frictional force in the travel direction, with the initial value of required torque being obtained as T_{U}, corresponding to the target slip ratio S_{U}. Equation (f2) or equation (f3) above may be used for calculating T_{U}, for example

In the second feedback control, since anti-lock brake control is being executed, the torque that is required for the entire vehicle is the sum of the output torque of the motor generator 212, the braking torque of the right front friction brake 231R, and the braking torque of the left front friction brake 231L. Hence, the value of output torque T_{MG} required from the motor generator 212 is obtained by subtracting the braking torque T_{FR} of the right front friction brake 231R and the braking torque T_{FL} of the left front friction brake 231L from the required torque T_{U} for the entire vehicle. The following equation (f4) is used in the calculation. ${T}_{MG} = {T}_{U} - {T}_{FR} - {T}_{FL}$ (f4)

In this way, by subtracting the braking torques of the right front friction brake 231R and the left front friction brake 231L from the required torque T_{U} of the entire vehicle, a frictional braking force and a regenerative braking force can be used together, utilizing the regenerative braking force as much as possible, without impairing the anti-lock brake control function of the right front friction brake 231R and the left front friction brake 231L.

The motor control unit 121 executes the second feedback control in step S108, following step S107. In executing the second feedback control, the motor control unit 121 determines the value of torque output from the motor generator 212, from the initial value that was determined in step S107, such that the motor generator 212 will reach a target rotation speed. It would be equally possible for the average of the respective target rotation speeds of the right front wheel 215R and of the left front wheel 215L to be used as the target rotation speed. The effect of executing the second feedback control will be described referring to Figs. 4 and 5.

Fig. 5 shows an image of the amplitudes of speed fluctuation of the right front wheel 215R and the left front wheel 215L, which are the driving wheels, during execution of the anti-lock brake control. If the motor control unit 121 did not control the rotation speed of the motor generator 212 during execution of anti-lock brake control, the rotation speed of the differential gear 214 would not be controlled, and hence there would be no restriction on the rotation speeds of the right front wheel 215R and the left front wheel 215L, which are connected to the differential gear 214. In that case, the right front friction brake 231R and the left front friction brake 231L would perform frictional braking independently on the right front wheel 215R and the left front wheel 215L. Hence, the amplitude of speed fluctuation of the right front wheel 215R and the left front wheel 215L would increase, as shown by the broken line in Fig. 5. If the amplitude of speed fluctuation of the right front wheel 215R and the left front wheel 215L is large, then the fluctuation amplitude B of the slip ratio also becomes large, as shown in Fig. 4, and time is required for achieving convergence to the target slip ratio.

In the present embodiment, the motor control unit 121 controls the rotation speed of the motor generator 212 during execution of anti-lock brake control, and hence the rotation speed of the differential gear 214 is controlled. Since the rotation speed of the differential gear 214 becomes the average of the respective rotation speeds of the right front wheel 215R and the left front wheel 215L, the right front wheel 215R and the left front wheel 215L influence each other such as to satisfy the average value. As a result, even if the right front friction brake 231R and the left front friction brake 231L perform frictional braking independently, the amplitude of fluctuation of the wheel speeds of the right front wheel 215R and the left front wheel 215L becomes small, as shown by the solid lines in Fig. 5. If the amplitude of the speed fluctuation of the right front wheel 215R and the left front wheel 215L is small, the fluctuation amplitude C of the slip ratio also becomes small, as shown in Fig. 4, enabling rapid convergence to the target slip ratio.

The description will be continued referring again to Fig. 3. In step S109 following step S108, a decision is made as to whether the slip detection unit 101 has recovered from the slip state. The judgement as to the slip state can be performed in the same manner as in step S101.

If the slip detection unit 101 judges that recovery from the slip state has been achieved (YES in step S109), a return is performed. If the slip detection unit 101 judges that recovery from the slip state has not been achieved (NO in step S109), the process returns to step S108.

In step S110, the depression amount detection unit 102 judges whether the brake pedal is in the ON state. If it is judged that the brake pedal state is ON (YES in step S110) the process proceeds to step S111. If it is judged that the brake pedal is in the off state (NO in step S110), a return is performed.

In step S111 following step S110, the slip detection unit 101 judges whether a slip state has occurred. The slip state can be judged in the same manner as in step S101.

If the slip detection unit 101 judges that there is a slip state (YES in step S111), the process proceeds to step S106. If it is not judged that there is a slip state (NO in step S111), a return is performed.

In the present embodiment, the braking control device, which is one aspect of the control device, is configured to include the ESC-ECU 10, the EV-ECU 12, and the MG-ECU 14. The braking control device is equipped with a motor control unit 121 which causes a drive braking torque to be generated for applying a driving force or braking force to the right-side driving wheel and the left-side driving wheel of the vehicle 2 from an electric motor that is connected to the right-side and left-side driving wheel via a differential device. The braking control device is also equipped with a friction control unit 103 which controls a right-side frictional braking device that performs frictional braking of the right-side driving wheel and a left-side frictional braking device that performs frictional braking of the left-side driving wheel. When the friction control unit 103 executes anti-lock brake control on the right-side driving wheel and the left-side driving wheel, the motor control unit 121 generates a drive braking torque.

In the present embodiment, when anti-lock brake control is executed, since the drive braking torque generated by the motor control unit 121 is transmitted to the right-side driving wheel and the left-side driving wheel via a differential device, the average value of the rotation speeds of the right-side driving wheel and the left-side driving wheel is controlled. Since the right-side driving wheel and the left-side driving wheel affect each other such as to satisfy the average value, the amplitude of fluctuation of the wheel speeds of the right-side driving wheel and the left-side driving wheel is reduced, the fluctuation range of each wheel speed is reduced, fluctuation of the slip ratio is suppressed, and convergence to the target slip ratio can be rapidly achieved, even if the right-side frictional braking device and the left-side frictional braking device perform frictional braking independently. By reducing the amplitude of fluctuation of the wheel speeds of the right-side driving wheel and the left-side driving wheel, vibration of the vehicle can be reduced. Since the regenerative braking force of the electric motor can be utilized even during execution of anti-lock brake control, the amount of power generated can be increased.

In the present embodiment, the braking control device includes a slip detection unit 101 that detects a slip state of the right-side driving wheel and the left-side driving wheel since the motor control unit 121 performs feedback control of the drive braking torque to a value that corresponds to the average value of the rotation speeds of the right-side driving wheel and the left-side driving wheel, the drive braking torque for starting the feedback control can be determined, and execution of the feedback control performed, based on the relationship between drive braking torque and the slip state of the right-side driving wheel and the left-side driving wheel.

With the present embodiment a value of drive braking torque for starting feedback control corresponding to the average value of the respective rotation speeds of the right-side driving wheel and the left-side driving wheel is determined based on a relationship between drive braking torque and the slip state of the right-side driving wheel and the left-side driving wheel. Hence it is possible to set the drive braking torque for starting the feedback control based on the behavior of the vehicle 2, without requiring knowledge of the load capacity of the vehicle 2 or of the road surface condition, and the slip state of the driving wheels can be made to quickly converge within a target range.

In the present embodiment, the motor control unit 121 can determine the drive braking torque for starting the feedback control as a value within a range in which the drive braking torque does not change to a condition of decreasing with respect to an increase in the slip state of the right-side and left-side driving wheel.

In a range of slip ratios that is lower than the control target range A described above referring to Fig. 4, i.e., a range in which a change in the drive braking torque does not turn to a condition of decreasing with respect to an increase in the slip state of the right-side and left-side driving wheel, the slip state varies in a stable manner when there is a change in the drive braking torque. By determining the drive braking torque for starting feedback control as a value within such a range, feedback control of the drive braking torque can be executed without disturbance to the behavior of the vehicle 2.

With the present embodiment, in determining an initial value of drive braking torque for starting feedback control, the motor control unit 121 can perform linear interpolation of changes in the slip state of the right-side driving wheel and the left-side driving wheel and of changes in the drive braking torque.

By applying linear interpolation, the correlation between changes in the slip state and changes in the drive braking torque can be grasped linearly as shown in Fig. 4, the calculation load on the motor control unit 121 can be reduced, and feedback control can be performed in a simple way.

In the present embodiment, the motor control unit 121 can learn the relationship between the drive braking torque and the slip state of the right-side driving wheel and the left-side driving wheel while the vehicle 2 is traveling.

When the vehicle 2 travels, component parts that contribute to a slip state, such as tires mounted on the right-side driving wheel and the left-side driving wheel, may be replaced. By learning the relationship between the drive braking torque and the slip state during travel, it is possible to respond appropriately to such replacements of travel elements.

In the present embodiment, a drive braking torque value corresponding to the average value of the respective rotation speeds of the right-side and left-side driving wheel is set as the output torque of the motor generator 212 during execution of anti-lock brake control. However instead of this, it is possible to use a drive braking torque that corresponds to an average value of rotation speed that is obtained by weighting the respective rotation speeds of the right-side driving wheel and the left-side driving wheel. The weighting coefficients may, for example, be calculated based on a difference between the degrees of deterioration of the respective tires mounted on the right-side and left-side driving wheel, a difference between the respective road surface conditions on which the right-side and left-side driving wheel travel, etc. By applying weighting, each driving wheel can be made to quickly converge to a target slip ratio, even if there is a difference between the respective frictional forces acting in the travel direction on the right-side driving wheel and the left-side driving wheel.

With the present embodiment, the ESC-ECU 10 is provided with a slip detection unit 101, a depression amount detection unit 102, and a friction control unit 103, and a motor control unit 121 is provided in the EV-ECU 12. However, the present disclosure is not limited to these physical components for realizing functional elements. For example, all or part of these may be realized by different components, and these components may be connected for communication via a network.

With one form of the present embodiment, when the friction control unit 103 executes anti-lock brake control on the right-side driving wheel and the left-side driving wheel, the motor control unit 121 causes a drive braking torque to be produced. The motor control unit 121 can calculate the drive braking torque by subtracting the left-side braking torque and the right-side braking torque from a required torque that corresponds to the average value of the rotation speeds of the right-side driving wheel and the left-side driving wheel, where the right-side braking torque is the torque of frictional braking of the left-side driving wheel by the right-side frictional braking device, and the left-side braking torque is the torque of frictional braking of the left-side driving wheel by the left-side frictional braking device

In the present embodiment, when executing anti-lock brake control, the drive braking torque to be generated by the electric motor is calculated by subtracting the left-side braking torque, whereby the left-side frictional braking device applies frictional braking of the left-side driving wheel, and the right-side braking torque, whereby the right-side frictional braking device applies frictional braking of the right-side driving wheel, from a required torque that corresponds to the average value of the rotation speeds of the right-side driving wheel and the left-side driving wheel. As a result, it becomes possible to use the frictional braking force and the regenerative braking force in combination without hindering the anti-lock brake control, and making the best use of the regenerative braking force. Since the regenerative braking force can be utilized even during the execution of the anti-lock brake control, the amount of power that is generated can be increased.

In the present embodiment, a drive braking torque that corresponds to the average value of the rotation speeds of the right-side driving wheel and the left-side driving wheel is used as the output torque of the motor generator 212 during execution of anti-lock brake control. However instead of this, a drive braking torque that corresponds to the average value of the rotation speeds obtained by weighting the respective rotation speeds of the right-side driving wheel and the left-side driving wheel may be used. The weighting coefficients may be calculated based on, for example, a difference in the degrees of deterioration of the respective tires mounted on the right-side driving wheel and the left-side driving wheel, a difference in the respective road surface conditions on which the driving wheels travel, and the like. By applying weighting, each driving wheel can be made to quickly converge to the target slip ratio, even if there is a difference between the respective frictional forces acting in the travel direction on the right-side driving wheel and the left-side driving wheel.

In the present embodiment, the ESC-ECU 10 is provided with a slip detection unit 101, a depression amount detection unit 102, and a friction control unit 103, and a motor control unit 121 is provided in the EV-ECU 12. However, the present disclosure is not limited to these physical components for realizing functional elements. For example, all or part of these functional elements may be realized by different components, and these components may be connected for communication via a network.

A modified example of the present embodiment will next be described, referring to Fig. 6, which shows a state of fluctuation of the hydraulic pressure applied to the wheel cylinder of the right front friction brake 231R during execution of anti-lock brake control. The case of the left front friction brake 231L can be inferred from that of the right front friction brake 231R, hence illustration is omitted.

During execution of anti-lock brake control, the hydraulic pressure applied to the wheel cylinder in a friction brake is controlled such as to fluctuate repeatedly. A friction brake has a configuration in which a wheel cylinder is moved by hydraulic pressure to press a brake pad against a disc rotor. Hence when the hydraulic pressure rises, the wheels decelerate, and when the hydraulic pressure falls, the wheels accelerate.

In general, as the hydraulic pressure applied to the wheel cylinder decreases, the degree of responsiveness of the friction brake deteriorates. The range D shown in Fig. 6 indicates a range where the degree of responsiveness of the right front friction brake 231R deteriorates. The braking torque corresponding to the hydraulic pressure at which the degree of responsiveness of the right front friction brake 231R becomes a predetermined first threshold value is designated as the right minimum torque T_{FR_min}. Similarly, the braking torque corresponding to the hydraulic pressure when the degree of responsiveness of the left front friction brake 231L becomes a predetermined second threshold value is designated as the left minimum torque T_{FL_min}.

When a frictional braking force and a regenerative braking force are used together during execution of anti-lock brake control, if the output torque of the motor generator 212 is excessively high, there is a danger that the required braking torques of the right front friction brake 231R and the left front friction brake 231L will become less than the right minimum torque T_{FR_min} and the left minimum torque T_{FL_min}, respectively, and the degree of responsiveness of the friction brakes may deteriorate. In the behavior illustrated by the broken line 610 in Fig. 6, the hydraulic pressure may fall to the range D, in which the degree of responsiveness of the friction brakes deteriorates.

In that regard, with this modified example, the motor control unit 121 adjusts the output torque T_{MG} of the motor generator 212 as follows, such that at least one of the right front friction brake 231R and the left front friction brake 231L does not fall below a predetermined degree of responsiveness. When the required braking torque T_{FR} for the right front friction brake 231R is the right minimum torque T_{FR_min} or more and the required braking torque T_{FL} for the left front friction brake 231L is the left minimum torque T_{FL_min} or more, the motor control unit 121 calculates the output torque T_{MG} of the motor generator using the following equation (f5). ${T}_{FR} \geq {T}_{FR_min} , {T}_{FL} \geq {T}_{FL_min} : {T}_{MG} = {T}_{U} - {T}_{FR} - {T}_{FL}$ (f5)

When the required braking torque T_{FR} for the right front friction brake 231R is lower than the right minimum torque T_{FR_min} and the required braking torque T_{FL} for the left front friction brake 231L is equal to or greater than the left minimum torque T_{FL_min}, the motor control unit 121 calculates the output torque T_{MG} of the motor generator 212 using the following equation f6). ${T}_{FR} < {T}_{FR_min} , {T}_{FL} \geq {T}_{FL_min} : {T}_{MG} = {T}_{U} - {T}_{FR} - {T}_{FL} - {T}_{FR_min}$ (f6)

When the required braking torque T_{FR} for the right front friction brake 231R is equal to or greater than the right minimum torque T_{FR_min} and the required braking torque T_{FL} for the left front friction brake 231L is less than the left minimum torque T_{FL_min}, the motor control unit 121 calculates the output torque T_{MG} of the motor generator 212 using the following equation (f7). ${T}_{FR} \geq {T}_{FR_min} , {T}_{FL} < {T}_{FL_min} : {T}_{MG} = {T}_{U} - {T}_{FR} - {T}_{FL} - {T}_{FL_min}$ (f7)

When the required braking torque T_{FR} for the right front friction brake 231R is lower than the right minimum torque T_{FR_min} and the required braking torque T_{FL} for the left front friction brake 231L is lower than the left minimum torque T_{FL_min}, the motor control unit 121 calculates the output torque T_{MG} of the motor generator 212 using the following equation (f8). ${T}_{FR} < {T}_{FR_min} , {T}_{FL} < {T}_{FL_min} : {T}_{MG} = {T}_{U} - {T}_{FR} - {T}_{FL} - {T}_{FR_min} - {T}_{FL_min}$ (f8)

In this way, by further subtracting the right minimum torque T_{FR_min} and the left minimum torque T_{FL_min} of the right front friction brake 231R and the left front friction brake 231L from the required torque T_{U}, the hydraulic pressure applied to the wheel cylinder is prevented from falling to the range D, as with the behavior shown by the solid line 600 in Fig. 6. The right front friction brake 231R and the left front friction brake 231L can thereby be driven in a range where the degree of responsiveness is good.

If the output torque T_{MG} of the motor generator 212 falls below a predetermined lower limit value, as a result of the calculations using equations (f4) to (f8) above, there is a danger that the direction of rotation of the motor generator 212 may become reversed, and that impacts between gear teeth may occur in the backlash range of the differential gear. Hence, the motor control unit 121 can predetermine a lower limit guard value of the output torque T_{MG}, and set the output torque T_{MG} to the lower limit guard value if the output torque T_{MG} falls below than that lower limit guard value. The lower limit guard value may be, for example, 0 (Nm).

It would be equally possible for the motor control unit 121 to set the output torque T_{MG} as 0 (Nm), and stop the second feedback control, if the sign of the output torque T_{MG} of the motor generator 212 suddenly changes from positive to negative,

In this modified embodiment, the motor control unit 121 adjusts the drive braking torque such that the degree of responsiveness of at least one of the right-side frictional braking device and the left-side frictional braking device does not fall below a predetermined responsiveness.

In this modified example, the frictional braking force and the regenerative braking force can be used in combination while preventing deterioration of the degree of responsiveness of the right-side frictional braking device and the left-side frictional braking device.

With this modified example, designating the required torque as T_{U}, the drive braking torque as T_{MG}, the right-side braking torque as T_{FR} , the left-side braking torque as T_{FL}, designating the braking torque at which the degree of responsiveness of the right-side frictional braking device becomes a predetermined first threshold value as T_{FR_min}, and the braking torque at which the degree of responsiveness of the left-side frictional braking device becomes a predetermined second threshold value as T_{FL_min}, the motor control unit adjusts the drive braking torque such as to satisfy the following equations:
1) ${T}_{FR} < {T}_{FR_min} , {T}_{FL} \geq {T}_{FL_min} : {T}_{MG} = {T}_{U} - {T}_{FR} - {T}_{FL} - {T}_{FR_min}$
2) ${T}_{FR} \geq {T}_{FR_min} , {T}_{FL} < {T}_{FL_min} : {T}_{MG} = {T}_{U} - {T}_{FR} - {T}_{FL} - {T}_{FL_min}$
3) ${T}_{FR} < {T}_{FR_min} , {T}_{FL} < {T}_{FL_min} : {T}_{MG} = {T}_{U} - {T}_{FR} - {T}_{FL} - {T}_{FR_min} - {T}_{FL_min}$

In this modified example, the value of the right-side minimum torque, at which the degree of responsiveness of the right-side frictional braking device reaches a predetermined first threshold, or the value of the left-side minimum torque, at which the responsiveness of the left-side frictional braking device reaches a predetermined second threshold, is further subtracted from the torque required for the vehicle. By thus further subtracting torque, the right-side frictional braking device and the left-side frictional braking device can be driven in a range where the degree of responsiveness is good.

In the above embodiment and the present modified example, the motor control unit 121 may set the drive braking torque to a predetermined lower limit guard value, if the drive braking torque falls below the lower limit guard value.

By controlling the drive braking torque of the electric motor such as not to fall below a predetermined lower limit guard value, it is possible to prevent impacts from occurring between gears due to the presence of backlash, when the force applied by the electric motor to the right-side driving wheel and the left-side driving wheels witches over from a braking force to a drive force.

In the above embodiment and the present modified example, the motor control unit 121 can halt control of the drive braking torque when the sign of the drive braking torque changes from positive to negative.

By halting control of the drive braking torque by the motor control unit 121 when the sign of the drive braking torque changes from positive to negative, the force applied by the electric motor to the right-side driving wheel and the left-side driving wheel can be prevented from switching over from a braking force to a driving force, and so prevent impacts from occurring between gears due to the presence of backlash.

In the present modified example, in the calculation of the output torque T_{MG} of the motor generator 212, respective cases are classified according to the conditions expressed by the above equations (f5) to (f8). However, the present disclosure is not limited to this, and the calculation of the output torque T_{MG} may be performed using the above equation (f8) under any condition.

### [Second Embodiment]

The second embodiment describes optional feedback-control features of the motor control unit that may be combined with the braking control device of the first embodiment. As shown in Fig. 7, a vehicle 2A is provided with a right front wheel 215R and left front wheel 215L, and a right rear wheel 216R and left rear wheel 216L. The right front wheel 215R and left front wheel 215L function as driving wheels for driving the vehicle 2A. The right rear wheel 216R and left rear wheel 216L function as driven wheels that rotate with the driving of the right front wheel 215R and left front wheel 215L.

The vehicle 2A is provided with an inverter 211, a motor generator 212, a battery 213, and a differential gear 214. The inverter 211 is provided between the motor generator 212 and the battery 213.When the motor generator 212 is driven by using electric power stored in the battery 213, the inverter 211 converts the direct current output from the battery 213 into a three-phase alternating current, which is supplied to the motor generator 212. When the motor generator 212 is used as a generator and regenerative braking is performed, the inverter 211 converts the three-phase alternating current output from the motor generator 212 into a direct current, which is supplied to the battery 213.

The motor generator 212 is an electrical machine that functions both as an electric generator and a generator. The motor generator 212 is connected to the right front wheel 215R and the left front wheel 215L, which are driving wheels, via the differential gear 214. When the three-phase alternating current is supplied from the inverter 211, the motor generator 212 rotates in accordance with the supplied three-phase alternating current, to drive the right front wheel 215R and the left front wheel 215L via the differential gear 214. When regenerative braking is performed, the rotations of the right front wheel 215R and the left front wheel 215L are transmitted to the motor generator 212 via the differential gear 214. When the battery 213 is capable of accumulating electricity, power is generated by the shaft rotation of the motor generator 212, and the three-phase alternating current that is generated is converted to direct current by the inverter 211 and supplied to the battery 213.

The vehicle 2A includes an ESC-ECU (Electronic Stability Control-Electronic Control Unit) 10A, an EV-ECU (Electric Vehicle -Electronic Control Unit) 12, and an MG-ECU (Motor Generator - Electric Control Unit) 14.

The ESC-ECU 10A is a device for stabilizing the behavior of the vehicle 2A. The ESC-ECU 10A receives detection signals that are output from a G sensor 221, a yaw rate sensor 222, a right front wheel speed sensor 223R, the left front wheel speed sensor 223L, a right rear wheel speed sensor 224R, and a left rear wheel speed sensor 224L.

The G sensor 221 is a sensor for measuring the acceleration of the vehicle 2A during acceleration and deceleration. During acceleration and deceleration of the vehicle 2A in the front-rear direction, the G sensor 221 outputs a signal indicative of the acceleration to the ESC-ECU 10A. The yaw rate sensor 222 is a sensor for measuring the angular velocity around the vertical axis of the vehicle 2A, and outputs a signal indicative of the angular velocity around the vertical axis of the vehicle 2A to the ESC-ECU 10.

The right front wheel speed sensor 223R is a sensor for measuring the wheel speed of the right front wheel 215R, and outputs a signal indicative of the wheel speed of the right front wheel 215R to the ESC-ECU 10A.

The left front wheel speed sensor 223L is a sensor for measuring the wheel speed of the left front wheel 215L, and outputs a signal indicative of the wheel speed of the left front wheel 215L to the ESC-ECU 10A.

The right rear wheel speed sensor 224R is a sensor for measuring the wheel speed of the right rear wheel 216R, and outputs a signal indicative of the wheel speed of the right rear wheel 216R to the ESC-ECU 10A.

The left rear wheel speed sensor 224L is a sensor for measuring the wheel speed of the left rear wheel 216L, and outputs a signal indicative of the wheel speed of the left rear wheel 216L to the ESC-ECU 10A.

The ESC-ECU 10A performs calculations for stabilizing the behavior of the vehicle 2A, based on the signals that are output from the G sensor 221, the yaw rate sensor 222, the right front wheel speed sensor 223R, the left front wheel speed sensor 223L, the right rear wheel speed sensor 224R, and the left rear wheel speed sensor 224L. The ESC-ECU 10A outputs a signal to the EV-ECU 12 for adjusting the vehicle body speed of the vehicle 2, based on the calculation results. Based also on the calculation results, the ESC-ECU 10A outputs signals for performing frictional braking to the right front friction brake 231R, the left front friction brake 231L, the right rear friction brake 232R, and the left rear friction brake 232L.

The EV-ECU 12 outputs to the MG-ECU 14 the value of torque corresponding to the rotation speed to be produced by the motor generator 212, based on the vehicle body speed information that is output from the ESC-ECU10A, the value of rotation speed of the motor generator 212 that is output from the MG-ECU 14, signals expressing operations performed by the driver, such as the degree of accelerator opening, and signals that are output from various sensors (not shown).

The MG-ECU 14 outputs a control signal to the inverter 211 such that the motor generator 212 produces a specified torque. The MG-ECU 14 also measures the rotation speed of the motor generator 212, and outputs information indicative of the rotation speed of the motor generator 212 to the EV-ECU 12.

The functional operations of the ESC-ECU 10A, the EV-ECU 12, and the MG-ECU 14 are described in the following, referring to Fig. 8. As shown in Fig. 8, the ESC-ECU 10A includes a slip detection unit 101 as a functional component.

The slip detection unit 101 detects a slip state of the right front wheel 215R and the left front wheel 215L, which are the driving wheels. Occurrence of a slip state can also be detected from the slip ratio of the vehicle 2. The slip ratio is obtained by the following equation (f1A). 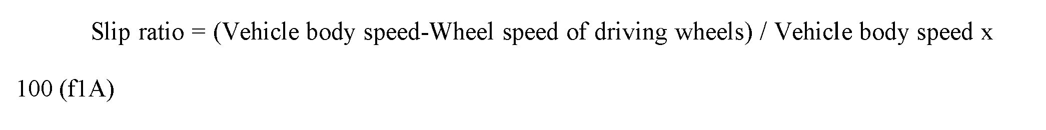 Slip ratio = (Vehicle body speed-Wheel speed of driving wheels) / Vehicle body speed x 100 (f1A)

The vehicle body speed can be obtained by using any or a combination of the wheel speeds of the right rear wheel 216R and the left rear wheel 216L, which are the driven wheels, the acceleration of the vehicle 2, and the GPS information. The wheel speed of the driven wheels can be obtained from the average value of the wheel speed of the right rear wheel 216R and the wheel speed of the left rear wheel 216L. The wheel speed of the right rear wheel 216R can be acquired from the output signal of the right rear wheel speed sensor 224R. The wheel speed of the left rear wheel 216L can be obtained from the output signal of the left rear wheel speed sensor 224L

The wheel speed of the driving wheels can be obtained as the average value of the wheel speed of the right front wheel 215R and the wheel speed of the left front wheel 215L. The wheel speed of the right front wheel 215R can be acquired from the output signal of the right front wheel speed sensor 223R. The wheel speed of the left front wheel 215L can be acquired from the output signal of the left front wheel speed sensor 223L. The wheel speed of the driving wheels can also be obtained from the rotation speed and reduction ratio of the motor generator 212. The wheel speed of the driving wheels can moreover also be obtained from the output value of a rotation sensor provided on the driving wheel axle, or a rotation sensor provided on the speed reducer.

The acceleration of the vehicle 2A can be acquired from the output signal of the G sensor 221. The GPS information of the vehicle 2A can be acquired by a GPS information acquisition device (not shown).

The slip state detected by the slip detection unit 101 is output to the EV-ECU 12. The EV-ECU 12 includes a motor control unit 121 as a functional component.

The motor control unit 121 is a section which causes a drive braking torque to be generated by the motor generator 212 for applying a drive force or a braking force to the right front wheel 215R and the left front wheel 215L, which are the driving wheels provided on the vehicle 2A, where the motor generator 212 is an electric motor that is connected to the right front wheel 215R and the left front wheel 215L. The motor control unit 121 aggregates information that is output from sensors that detects driver operations, such as the accelerator opening degree and from various other sensors, information that is output from the ESC-ECU 10, and information that is output from the MG-ECU 14. The motor control unit 121 thereby determines the indicated torque for the motor generator 212, and outputs the indicated torque value to the MG-ECU 14.

Specific control contents of the slip detection unit 101 and the motor control unit 121 are described in the following referring to Fig. 9.

In step S201, the slip detection unit 101 judges whether a slip state has occurred. Occurrence of a slip state can be judged by various methods. For example, if the rotation speed of the motor generator 212 exceeds a slip judgement rotation speed that has been determined in accordance with the vehicle body speed of the vehicle 2A at the current time, it is judged that the vehicle is in a slip state. As another example, the slip ratio may be calculated using the following equation (f1A), and if the result exceeds a predetermined slip ratio judgement value, it can be judged that there is a slip state. 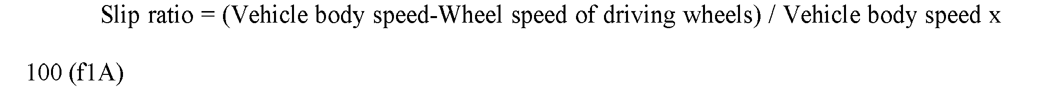 Slip ratio = (Vehicle body speed-Wheel speed of driving wheels) / Vehicle body speed x 100 (f1A)

Suitable values for controlling the vehicle 2A can be used as appropriate, including the case in which a slip judgement rotation speed is used, the case in which a slip ratio judgement value is used, and cases in which other indexes are used. An example of the case in which a slip ratio judgement value is used will be described referring to Fig. 10.

Fig. 10 is a graph in which the horizontal axis expresses slip ratio values and the vertical axis expresses values of frictional force in the direction of travel. The relationship between the slip ratio and the frictional force in the direction of travel changes depending on the road surface conditions and tire conditions. Fig. 10 shows examples of a frictional force line L_{D} for a dry asphalt road surface and a frictional force line L_{S} for a snow-covered road.

In both the frictional force line L_{D} and the frictional force line L_{S}, the frictional force in the travel direction becomes a maximum when the slip ratio is 15% to 20%, and hence that is set as a control target range A. A suitable value of slip ratio for controlling the vehicle 2 can be used as the slip judgement value, as described above, and the value does not necessarily have to be within the control target range A. For example, a slip ratio of approximately 10% may be set as the slip judgement value S_{R}.

As shown in Fig. 10, the torque corresponding to the slip judgement value S_{R} is the slip judgement torque T_{R} in the case of the friction force line L_{D}, and is the slip judgement torque T_{Ra} in the case of the friction force line L_{S}.

The description will be continued referring again to Fig. 9. If the slip detection unit 101 judges that there is a slip state (YES in step S201), the process proceeds to step S202. If the slip detection unit 101 judges that there is not a slip state (NO in step S201), a return is performed.

In step S202, the motor control unit 121 determines an initial value of feedback control for controlling the motor generator 212 to run at a target rotation speed. A value of output torque which is such that the target rotation speed will be reached is used as the initial value.

The method of determining the initial value will be described referring again to Fig. 10. When the slip judgement value S_{R} has been determined, the relationship between the slip ratio and the frictional force in the travel direction, up to the slip judgement value S_{R}, is obtained. This relationship changes depending on the road surface condition and the tire condition. The relationship between the frictional force lines L_{D} and L_{S} can be obtained, as illustrated in Fig. 10.

If the frictional force lines L_{D} and the frictional force line L_{S} exhibit a linear relationship between slip ratio and frictional force in the travel direction, then when a target slip ratio S_{T} has been set, an initial torque T_{T} and an initial torque T_{Ta} can be determined. These are torque values for initiating feedback control, respectively corresponding to the frictional force lines L_{D} and L_{S}. The following equations (f2A) and (f3A) are used for the calculations: ${T}_{T} = {T}_{R} \times {S}_{T} / {S}_{R}$ (f2A) ${T}_{Ta} = {T}_{Ra} \times {S}_{T} / {S}_{R}$ (f3A)

In this way, the motor control unit 121 can determine the output torque of the corresponding to a target value of slip ratio, by using the relationship between output torque of the motor generator 212 and slip ratio, in the part of the relationship until occurrence of slip is judged.

The description will be continued referring again to Fig. 9. In step S203 following step S202, the motor control unit 121 executes feedback control of the motor generator 212. By applying this feedback control, the motor control unit 121 determines the output torque from the motor generator 212, starting from the initial value determined in step S202, such that a target value of rotation speed is reached,

In step S204 following step S203, the slip detection unit 101 judges whether recovery has occurred from the slip state. The slip state can be judged in the same manner as in step S201.

If the slip detection unit 101 judges that there is recovery from the slip state (YES in step S204), a return is performed. If the slip detection unit 101 does not judge that there is recovery from the slip state (NO in step S204), the process returns to step S203.

The feedback-control features described in the second embodiment may be applied to the motor control unit 121 of the braking control device of the first embodiment. In particular, the motor control unit 121 determines a drive braking torque for starting feedback control based on a relationship between the drive braking torque and the slip state of the driving wheels.

In the present embodiment, a drive braking torque is determined that corresponds to a value of rotation speed of the driving wheels at which feedback control can be started, with that value of drive braking torque being determined based on a relationship between the drive braking torque and the slip state of the driving wheels. Hence, determination of the drive braking torque for starting the feedback control can be based only on the behavior of the vehicle 2A, without requiring the load capacity of the vehicle 2A or the road surface condition to be known, and the slip state of the driving wheels can be made to quickly converge within a target range.

With the present embodiment, the motor control unit 121 determines the drive braking torque for starting the feedback control within a range in which the drive braking torque does not decrease with respect to an increase in the slip state of the driving wheels.

In a range in which the drive braking torque does not change such as to decrease with respect to an increase in the slip state of the driving wheels such as a range of slip ratio values lower than those in the control target range A, described above referring to Fig. 10, the slip state changes in a stable manner in response to changes in the drive braking torque. By determining the drive braking torque for starting the feedback control as a value that is within such a range, feedback control of the drive braking torque can be executed without causing disturbance of the behavior of the vehicle 2A.

In determining the drive braking torque for starting the feedback control, the motor control unit 121 of the present embodiment performs linear interpolation of changes in the slip state of the driving wheel and in the drive braking torque.

By applying linear interpolation, the correlation between the change in the slip state and the drive braking torque can be grasped linearly, as shown in Fig. 10, the calculation load on the motor control unit 121 can be reduced, and feedback control can be simplified.

With the present embodiment, the motor control unit 121 can learn the relationship between the drive braking torque and the slip state of the driving wheels while the vehicle 2A is traveling.

When the vehicle 2A travels, elements of the vehicle that are factors in a slip state, such as the tires mounted on the driving wheels, may be replaced. By learning the relationship between the drive braking torque and the slip state while the vehicle is traveling, it becomes possible to accurately respond to replacements of such travel elements.

Embodiments have been described above referring to specific examples, however, the present disclosure is not limited to these specific examples. Appropriate design changes to these specific examples, made by persons skilled in the art, also come within the scope of the present disclosure, so long as they have the features of the present disclosure. The respective elements included in each of these specific examples, and the arrangement, conditions, shapes, etc., of these elements are not limited to those exemplified, and appropriate changes may be made.
Furthermore, the combinations of elements included in each of these specific examples may be appropriately changed, if there is no technical contradiction

In determining the drive braking torque for starting the feedback control, the motor control unit 121 of the present embodiment performs linear interpolation of changes in the slip state of the driving wheel and in the drive braking torque.

By applying linear interpolation, the correlation between the change in the slip state and the drive braking torque can be grasped linearly, as shown in Fig. 10, the calculation load on the motor control unit 121 can be reduced, and feedback control can be simplified.

With the present embodiment, the motor control unit 121 can learn the relationship between the drive braking torque and the slip state of the driving wheels while the vehicle 2A is traveling.

When the vehicle 2A travels, elements of the vehicle that are factors in a slip state, such as the tires mounted on the driving wheels, may be replaced. By learning the relationship between the drive braking torque and the slip state while the vehicle is traveling, it becomes possible to accurately respond to replacements of such travel elements.

## Claims

1. A control device comprising:
a motor control unit (121) which generates a drive braking torque for applying a drive force or a braking force to a right-side driving wheel (215R) and a left-side driving wheel (215L) provided on a vehicle (2), from an electric motor (212) that is connected to the right-side driving wheel (215R) and the left-side driving wheel (215L) via a differential device (214), and
a friction control unit (103) which controls a right-side frictional braking device (231R) that performs frictional braking of the right-side driving wheel (215R) and a left-side frictional braking device (231L) that performs frictional braking of the left-side driving wheel (215L), wherein
the motor control unit (121) generates the drive braking torque in response to the friction control unit (103) executing anti-lock brake control on the right-side driving wheel (215R) and the left-side driving wheel (215L), **characterized in that**
the motor control unit (121) calculates the drive braking torque by subtracting, from a required torque that corresponds to an average value of the rotation speed of the left-side driving wheel (215L) and the rotation speed of the right-side driving wheel (215R), a right-side braking torque by which the right-side frictional braking device (231R) performs frictional braking of the right-side driving wheel (215R) and a left-side braking torque by which the left-side frictional braking device (231L) performs frictional braking of the left-side driving wheel (215L), and
the motor control unit (121) adjusts the drive braking torque such that the responsiveness of at least one of the right-side frictional braking device (231R) and the left-side frictional braking device (231L) does not fall below a predetermined degree.

2. The control device according to claim 1, further comprising:
a slip detection unit (101) for detecting a slip state of the right-side driving wheel (215R) and the left-side driving wheel (215L); wherein
the motor control unit (121) performs feedback control of a drive braking torque corresponding to the average value of the rotation speed of the right-side driving wheel (215R) and the rotation speed of the left-side driving wheel (215L), and
the motor control unit (121) determines a value of the drive braking torque for starting the feedback control, and executes the feedback control, based on a relationship between the drive braking torque and the slip state of the right-side driving wheel (215R) and the left-side driving wheel (215L).

3. The control device according to claim 2, wherein
the motor control unit (121) determines the drive braking torque for starting the feedback control as a value within a range in which the drive braking torque does not change such as to decrease with respect to an increase in the slip state of the right-side driving wheel (215R) and the left-side driving wheel (215L).

4. The control device according to claim 2 or claim 3, wherein
in determining the drive braking torque for starting the feedback control, the motor control unit (121) performs linear interpolation of changes in the slip state of the right-side driving wheel (215R) and left-side driving wheel (215L) and changes in the drive braking torque.

5. The control device according to any of claims 2 to 4, wherein
the motor control unit (121) learns the relationship between the drive braking torque and the slip state of the right-side driving wheel (215R) and the left-side driving wheel (215L) while the vehicle (2) is running.

6. The control device according to claim 1, wherein
designating the required torque as T_{U}, the drive braking torque as T_{MC}, the right-side braking torque as T_{FR}, the left-side braking torque as T_{FL}, the braking torque at which the degree of responsiveness of the right-side frictional braking device (231R) becomes a predetermined first threshold value as T_{FR_min} , and the braking torque at which the degree of responsiveness of the left-side frictional braking device (231L) becomes a predetermined second threshold value as T_{FL_min}, the motor control unit (121) adjusts the drive braking torque such as to satisfy the following equations:
1) ${T}_{FR} < {T}_{FR_min} , {T}_{FL} \geq {T}_{FL_min} : {T}_{MG} = {T}_{U} - {T}_{FR} - {T}_{FL} - {T}_{FR_min}$
2) ${T}_{FR} \geq {T}_{FR_min} , {T}_{FL} < {T}_{FL_min} : {T}_{MG} = {T}_{U} - {T}_{FR} - {T}_{FL} - {T}_{FL_min}$
3) ${T}_{FR} < {T}_{FR_min} , {T}_{FL} < {T}_{FL_min} : {T}_{MG} = {T}_{U} - {T}_{FR} - {T}_{FL} - {T}_{FR_min} - {T}_{FL_min}$

7. The control device according to claim 1 or 6, wherein
when the drive braking torque becomes lower than a predetermined lower limit guard value, the motor control unit (121) sets the drive braking torque to the lower limit guard value.

8. The control device according to any of claims 1, 6 or 7, wherein
when the sign of the drive braking torque changes from positive to negative, the motor control unit (121) halts control of the drive braking torque.

## Patentansprüche

1. Steuervorrichtung, Folgendes umfassend:
eine Motorsteuereinheit (121), die ein Antriebs- und Bremsdrehmoment erzeugt, um eine Antriebskraft oder eine Bremskraft auf ein rechtes Antriebsrad (215R) und ein linkes Antriebsrad (215L) auszuüben, die an einem Fahrzeug (2) vorgesehen sind, aus einem Elektromotor (212), der über eine Differentialvorrichtung (214) mit dem rechten Antriebsrad (215R) und dem linken Antriebsrad (215L) verbunden ist, und
eine Reibungssteuereinheit (103), die eine rechte Reibungsbremsvorrichtung (231R), die eine Reibungsbremsung des rechten Antriebsrades (215R) bewirkt, und eine linke Reibungsbremsvorrichtung (231L), die eine Reibungsbremsung des linken Antriebsrades (215L) bewirkt, steuert, wobei
die Motorsteuereinheit (121) das Antriebs- und Bremsdrehmoment erzeugt, wenn die Reibungssteuereinheit (103) eine Antiblockier-Bremssteuerung am rechten Antriebsrad (215R) und am linken Antriebsrad (215L) durchführt, **dadurch gekennzeichnet, dass**
die Motorsteuereinheit (121) das Antriebs- und Bremsdrehmoment berechnet, indem sie von einem erforderlichen Drehmoment, das einem Durchschnittswert aus der Drehzahl des linken Antriebsrads (215L) und der Drehzahl des rechten Antriebsrads (215R) entspricht, ein rechtes Bremsmoment, mit dem die rechte Reibungsbremsvorrichtung (231R) eine Reibungsbremsung des rechten Antriebsrades (215R) durchführt, sowie ein linkes Bremsmoment, mit dem die linke Reibungsbremsvorrichtung (231L) eine Reibungsbremsung des linken Antriebsrades (215L) durchführt, und
die Motorsteuereinheit (121) das Antriebs- und Bremsdrehmoment so einstellt, dass die Ansprechfähigkeit der rechten Reibungsbremsvorrichtung (231R) oder der linken Reibungsbremsvorrichtung (231L) oder beider nicht unter einen vorgegebenen Wert fällt.

2. Steuervorrichtung nach Anspruch 1, ferner Folgendes umfassend:
eine Schlupferkennungseinheit (101) zum Erkennen eines Schlupfzustands des rechten Antriebsrads (215R) und des linken Antriebsrads (215L); wobei
die Motorsteuereinheit (121) eine Rückkopplungsregelung eines Antriebs- und Bremsdrehmoments durchführt, das dem Mittelwert aus der Drehzahl des rechten Antriebsrads (215R) und der Drehzahl des linken Antriebsrads (215L) entspricht, und
die Motorsteuereinheit (121) einen Wert des Antriebs- und Bremsdrehmoments zum Starten der Rückkopplungsregelung ermittelt und die Rückkopplungsregelung auf der Grundlage eines Zusammenhangs zwischen dem Antriebs- und Bremsdrehmoment und dem Schlupfzustand des rechten Antriebsrads (215R) und des linken Antriebsrads (215L) durchführt.

3. Steuervorrichtung nach Anspruch 2, wobei
die Motorsteuereinheit (121) das Antriebs- und Bremsdrehmoment zum Starten der Rückkopplungsregelung als einen Wert innerhalb eines Bereichs bestimmt, in dem sich das Antriebs- und Bremsdrehmoment nicht so verändert, dass es bei einer Zunahme des Schlupfzustands des rechten Antriebsrads (215R) und des linken Antriebsrads (215L) abnimmt.

4. Steuervorrichtung nach Anspruch 2 oder Anspruch 3, wobei
bei der Bestimmung des Antriebs- und Bremsdrehmoments zum Starten der Rückkopplungsregelung die Motorsteuereinheit (121) eine lineare Interpolation der Änderungen des Schlupfzustands des rechten Antriebsrads (215R) und des linken Antriebsrads (215L) sowie der Änderungen des Antriebs- und Bremsdrehmoments durchführt.

5. Steuervorrichtung nach einem der Ansprüche 2 bis 4, wobei
die Motorsteuereinheit (121) während der Fahrt des Fahrzeugs (2) das Verhältnis zwischen dem Antriebs- und Bremsdrehmoment und dem Schlupfzustand des rechten Antriebsrads (215R) sowie des linken Antriebsrads (215L) erlernt.

6. Steuervorrichtung nach Anspruch 1, wobei
unter Bezeichnung des erforderlichen Drehmoments als T_{U}, des Antriebs- und Bremsdrehmoments als T_{MG}, des rechten Bremsmoments als T_{FR}, des linken Bremsmoments als T_{FL}, des Bremsmoments, bei dem der Ansprechgrad der rechten Reibungsbremsvorrichtung (231R) einen vorbestimmten ersten Schwellenwert annimmt, als T_{FR_min}, und das Bremsmoment, bei dem der Ansprechgrad der rechten Reibungsbremsvorrichtung (231R) einen vorbestimmten zweiten Schwellenwert erreicht, als T_{FL_min} bezeichnet wird, die Motorsteuereinheit (121) das Antriebs- und Bremsdrehmoment so einstellt, dass die folgenden Gleichungen erfüllt sind:
1) ${T}_{FR} < {T}_{FR_min} , {T}_{FL} \geq {T}_{FL_min} : {T}_{MG} = {T}_{U} - {T}_{FR} - {T}_{FL} - {T}_{FR_min}$
2) ${T}_{FR} \geq {T}_{FR_min} , {T}_{FL} < {T}_{FL_min} : {T}_{MG} = {T}_{U} - {T}_{FR} - {T}_{FL} - {T}_{FL_min}$
3) ${T}_{FR} < {T}_{FR_min} , {T}_{FL} < {T}_{FL_min} : {T}_{MG} = {T}_{U} - {T}_{FR} - {T}_{FL} - {T}_{FR_min} - {T}_{FL_min}$

7. Steuervorrichtung nach Anspruch 1 oder 6, wobei,
wenn das Antriebs- und Bremsdrehmoment unter einen vorgegebenen unteren Grenzschutzwert fällt, die Motorsteuereinheit (121) das Antriebs- und Bremsdrehmoment auf den unteren Grenzschutzwert einstellt.

8. Steuervorrichtung nach einem der Ansprüche 1, 6 oder 7, wobei,
wenn sich das Vorzeichen des Antriebs- und Bremsdrehmoments von positiv auf negativ ändert, die Motorsteuereinheit (121) die Steuerung des Antriebs- und Bremsdrehmoments anhält.

## Revendications

1. Dispositif de commande comprenant :
une unité de commande de moteur (121) qui génère un couple d'entraînement ou de freinage pour appliquer une force d'entraînement ou une force de freinage à une roue motrice droite (215R) et à une roue motrice gauche (215L) montées sur un véhicule (2), à partir d'un moteur électrique (212) relié à la roue motrice droite (215R) et à la roue motrice gauche (215L) par l'intermédiaire d'un dispositif différentiel (214), et
une unité de commande de friction (103) qui commande un dispositif de freinage par friction côté droit (231R) assurant le freinage par friction de la roue motrice droite (215R) et un dispositif de freinage par friction côté gauche (231L) assurant le freinage par friction de la roue motrice gauche (215L), dans lequel
l'unité de commande du moteur (121) génère le couple d'entraînement ou de freinage en réponse à l'exécution, par l'unité de commande de friction (103), d'une commande de freinage antiblocage sur la roue motrice droite (215R) et la roue motrice gauche (215L), **caractérisé en ce que**
l'unité de commande du moteur (121) calcule le couple d'entraînement ou de freinage en soustrayant, d'un couple requis correspondant à une valeur moyenne de la vitesse de rotation de la roue motrice gauche (215L) et de la vitesse de rotation de la roue motrice droite (215R), un couple de freinage droit, grâce auquel le dispositif de freinage par friction droit (231R) effectue le freinage par friction de la roue motrice droite (215R), et un couple de freinage gauche, grâce auquel le dispositif de freinage par friction gauche (231L) effectue le freinage par friction de la roue motrice gauche (215L), et
l'unité de commande du moteur (121) ajuste le couple d'entraînement ou de freinage de telle sorte que la réactivité d'au moins l'un parmi le dispositif de freinage par friction droit (231R) et le dispositif de freinage par friction gauche (231L) ne descende pas en dessous d'un seuil prédéterminé.

2. Dispositif de commande selon la revendication 1, comprenant en outre :
une unité de détection de glissement (101) pour détecter un état de glissement de la roue motrice droite (215R) et de la roue motrice gauche (215L) ; dans lequel
l'unité de commande du moteur (121) effectue une commande de rétroaction d'un couple d'entraînement ou de freinage correspondant à la valeur moyenne de la vitesse de rotation de la roue motrice droite (215R) et de la vitesse de rotation de la roue motrice gauche (215L), et
l'unité de commande du moteur (121) détermine une valeur du le couple d'entraînement ou de freinage pour lancer la commande de rétroaction, et exécute ladite commande de rétroaction, sur la base d'une relation entre le couple d'entraînement ou de freinage et l'état de glissement de la roue motrice droite (215R) et de la roue motrice gauche (215L).

3. Dispositif de commande selon la revendication 2, dans lequel
l'unité de commande du moteur (121) détermine le couple d'entraînement ou de freinage pour lancer la commande de rétroaction comme une valeur comprise dans une plage dans laquelle le couple d'entraînement ou de freinage ne varie pas, c'est-à-dire ne diminue pas, par rapport à une augmentation de l'état de glissement de la roue motrice droite (215R) et de la roue motrice gauche (215L).

4. Dispositif de commande selon la revendication 2 ou la revendication 3, dans lequel
lors de la détermination du couple d'entraînement ou de freinage pour le démarrage de la commande de rétroaction, l'unité de commande du moteur (121) effectue une interpolation linéaire entre les variations de l'état de glissement de la roue motrice droite (215R) et de la roue motrice gauche (215L) et les variations du couple d'entraînement ou de freinage.

5. Dispositif de commande selon l'une quelconque des revendications 2 à 4, dans lequel
l'unité de commande du moteur (121) apprend la relation entre le couple d'entraînement ou de freinage et l'état de glissement de la roue motrice droite (215R) et de la roue motrice gauche (215L) pendant que le véhicule (2) roule.

6. Dispositif de commande selon la revendication 1, dans lequel
en désignant le couple requis par T_{U}, le couple d'entraînement ou de freinage par T_{MG}, le couple de freinage de la roue droite par T_{FR}, le couple de freinage de la roue gauche par T_{FL}, le couple de freinage auquel le degré de réactivité du dispositif de freinage par friction de la roue droite (231R) atteint une première valeur seuil prédéterminée par T_{FR_min}, et le couple de freinage auquel le degré de réactivité du dispositif de freinage par friction côté gauche (231L) atteint une deuxième valeur seuil prédéterminée étant désigné par T_{FL_min}, l'unité de commande du moteur (121) ajuste le couple d'entraînement ou de freinage de manière à satisfaire les équations suivantes :
1) ${T}_{FR} < {T}_{FR_min} , {T}_{FL} \geq {T}_{FL_min} : {T}_{MG} = {T}_{U} - {T}_{FR} - {T}_{FL} - {T}_{FR_min}$
2) ${T}_{FR} \geq {T}_{FR_min} , {T}_{FL} < {T}_{FL_min} : {T}_{MG} = {T}_{U} - {T}_{FR} - {T}_{FL} - {T}_{FL_min}$
3) ${T}_{FR} < {T}_{FR_min} , {T}_{FL} < {T}_{FL_min} : {T}_{MG} = {T}_{U} - {T}_{FR} - {T}_{FL} - {T}_{FR_min} - {T}_{FL_min}$

7. Dispositif de commande selon la revendication 1 ou 6, dans lequel
lorsque le couple d'entraînement ou de freinage devient inférieur à une valeur de seuil inférieure prédéterminée, l'unité de commande du moteur (121) règle le couple d'entraînement ou de freinage à ladite valeur de seuil inférieure.

8. Dispositif de commande selon l'une quelconque des revendications 1, 6 ou 7, dans lequel
lorsque le signe du couple d'entraînement ou de freinage passe de positif à négatif, l'unité de commande du moteur (121) interrompt la commande du couple d'entraînement ou de freinage.
